# EUROPEAN PATENT SPECIFICATION

(11) **EP 0 491 933 B1**
(45) Date of publication and mention of the grant of the patent: **24.04.1996**
(21) Application number: 91914011.1
(22) Date of filing: 19.07.1991
(51) Int. Cl.: H01H 73/08, H01H 83/02

(54) **PLUG-IN CIRCUIT BREAKER**
STECKBARER SCHUTZSCHALTER
DISJONCTEUR ENFICHABLE

(30) Priority: 19.07.1990 US 555336
(43) Date of publication of application: 01.07.1992
(73) Proprietor: SQUARE D COMPANY, Palatine, Illinois 60067 (US)
(72) Inventor: RUNYAN, Daniel, James, Hickman, NE 68372 (US)
(74) Representative: Moreland, David, Dr.
(86) International application number: PCT/US91/05097
(87) International publication number: WO 92/02065

(56) References cited:
- EP-A- 0 325 371
- FR-A- 2 088 489
- US-A- 3 246 098
- US-A- 4 004 197
- US-A- 4 521 824

## Description

This invention relates in general to circuit breakers and particularly to switched neutral circuit breakers and to circuit breakers that include a ground fault interrupting capability.

Ground fault interrupter (GFI) type circuit breakers and switched neutral (SWN) circuit breakers have developed in response to a growing need for protection from potentially lethal leakage currents that may develop due to faulty electrical equipment or defective neutral connections. The operation of such circuit breaker is well known in the art. The GFI breakers generally includes a means for sensing an unbalance in the electrical phase and neutral currents flowing to a load circuit, which indicates that some of the current is flowing in paths external to the wired path. Such current is referred to as ground fault. A particular type of ground fault interrupting circuit breaker manufactured by Square D Company includes a conductive resilient jaw (or stab) for electrically and mechanically engaging one electrical phase bus bar and an insulating resilient clamp that clips onto the other electrical phase bus bar for locating and supporting the circuit breaker. Separate phase and neutral connector terminals are provided on the breaker for connection to the appropriate phase and neutral load conductors. The phase conductive path includes a breaker mechanism for interrupting current. A separate stranded wire (pigtail) is provided for connecting the circuit breaker neutral to the panel board or loadcenter neutral. The pigtail is connected to a wire that passes through the window of a ground fault transformer to the neutral connector. A wire in the phase conductive path also passes through the transformer window and couples to the interrupting mechanism of the breaker. The electronics (components and circuitry) for operating the ground fault interrupter are included on a printed circuit board that is mounted in the breaker housing and on which the transformer is secured. Other prior art GFI breakers use "dummy" housings to attach the GFI electronics.

Switched neutral type breakers are used in special environments and generally consist of two-pole housings with only one phase stab being electrically connected to the source. The second phase interrupting mechanism is connected in the neutral load circuit. The neutral is again connected to the panel neutral by means of a stranded wire pigtail.

The above-identified prior art circuit breakers work well, but require extra care and attention during installation and clutter the wireways in the loadcenter because of the need to accommodate the coiled pigtail. Use of more than one of such breakers compounds the cluttered wireway problem. Such breakers also require added manufacturing operations which add to their costs and complexity.

The present invention circuit breaker solves many of the shortcomings of the prior art as exemplified by the above-identified ground fault interrupting circuit breaker.

US 4 004 197 (HAWKES) discloses a panelboard and circuit breaker combination having a pair of load bus bars with a neutral bus bar therebetween, at least one circuit breaker having a housing and detachably mounted on the bus bars, the circuit breaker having clip means releasably connected to the neutral bus bar having at least one clip means releasably connected to one of the load bus bars, the clip means being recessed within the housing, and the housing having opening means aligned with the clip means and in which the bus bars are disposed when connected to the clip means.

FR 2 088 489 (THE RUCKER COMPANY) discloses an electric circuit breaker for use in a panel board which electrical circuit breaker comprises a casing, electrical conductors within the casing for connection between the line and neutral conductors respectively of the power and branch circuits, a terminal connected to one of the conductors within the casing and extending from one side of the casing for releasably engaging one of the bus bars in the panel board to support the breaker in a predetermined position in the panel board, electrical contacts connected in series with at least one of the conductors within the casing and movable between open and closed positions for completing or interrupting a circuit between the power circuit and branch circuit conductors to which the at least one of the conductors is connected, manually controllable means having a member extending out of the casing for moving the contacts between their open and closed positions, said members extending from the side of the casing opposite to the terminal and being adapted to extend through an opening in the panel when the circuit breaker is installed in the panel board with the terminal engaging the bus bar means in the casing for moving the contacts to their open position in response to a current flow through the contacts in excess of a predetermined magnitude and ground fault responsive means in the casing for comparing the currents in the conductors within the casing and causing the contacts to move to their open position in the event of an imbalance in said currents.

### Objects of the Invention

A principal object of the invention is to provide an improved circuit breaker.

Another object of the invention is to provide a GFI circuit breaker that is readily installed in a loadcenter.

A further object to the invention is to provide a plug-in GFI circuit breaker that is compatible with existing loadcenter installations.

### Summary of the Invention

According to a first aspect of the present invention there is provided a plug-in circuit breaker for use with a loadcenter having an electrical phase bus bar and an electrical neutral bar comprising:
a first push-on connector adapted to mechanically and electrically engage said electrical phase bus bar;
interrupting means for interrupting current connected to said first push-on connector;
ground fault circuit means including a transformer said transformer further including a window; characterised in that the breaker further comprises:
a second push-on connector adapted to mechanically and electrically engage said electrical neutral bar;
first and second flat, rigid conductive straps passing through said window;
said first conductive strap being coupled to said interrupting means at one end and to a phase load terminal at its other end; and
said second conductive strap being coupled to said second push-on connector at one end and to a neutral load terminal at its other end.

According to a second aspect of the present invention there is provided a plug-in circuit breaker for use with a loadcenter having an electrical phase bus bar and an electrical neutral bus bar comprising:
a housing including means for interrupting current;
electronic ground fault sensing means, including a transformer in said housing;
first push-on connector means adapted to mechanically and electrically engage said electrical phase bus bar;
characterised in that the breaker further comprises:
second push-on connector means adapted to mechanically and electrically engage said electrical neutral bar;
first and second terminals connected to said first and second push-on connector means, respectively, and adapted to connect an electrical phase and an electrical neutral load conductor to said circuit breaker;
a neutral conductive strap and a phase conductive strap supported on said printed circuit board and passing through a window in said transformer and connected at one end, respectively, to said first and second terminals, said transformer being magnetically coupled to said conductive straps and responsive to currents flowing therein, said second push-on connector means being formed at the other end of said neutral conductive strap.

### Brief Description of the Drawings

The above and other objects and advantages of the invention will be apparent upon reading the following description in conjunction with the drawings in which:
- FIG 1: is a broken away view of a prior art GFI circuit breaker;
- FIG 2: is a perspective view showing installation of a circuit breaker constructed in accordance with the invention in a loadcenter panel;
- FIG 3: is an enlarged broken away view showing the novel elements of the circuit breaker of the invention;
- FIG 4: is a perspective view of the conductive neutral strap used in the circuit breaker of the invention; and
- FIG 5: is a perspective view of the phase conductive strap used in the circuit breaker of the invention.

### Description of the Preferred Embodiment

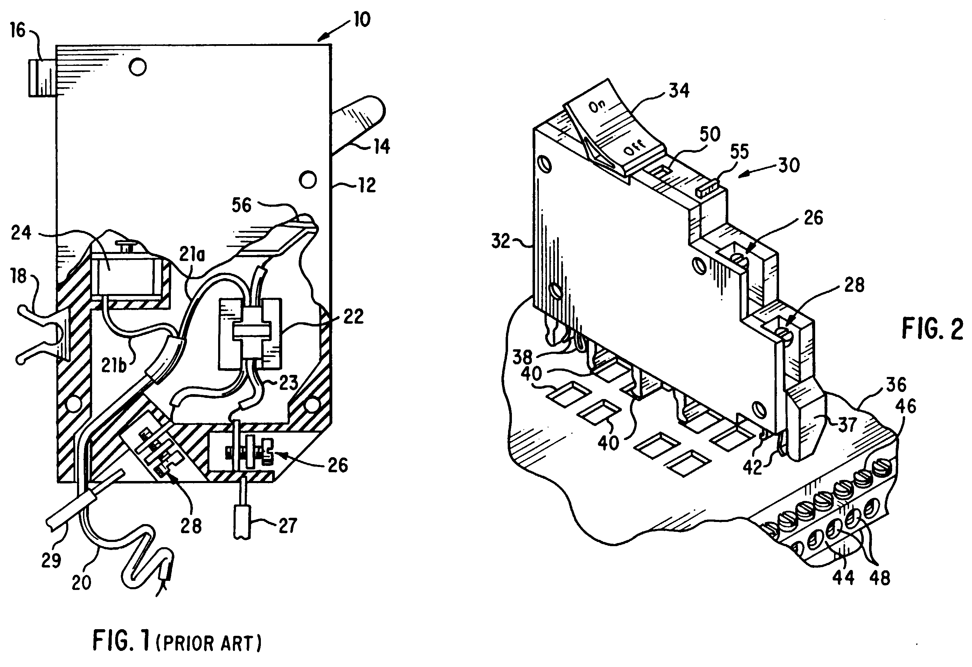

In FIG 1, a GFI type circuit breaker, generally corresponding to Square D Company's trademarked QO GFI breaker, is shown. The circuit breaker 10 includes a housing 12 and an operating handle 14. A conductive, resilient line or phase stab 16 is used in conjunction with a nonconductive resilient clamp 18 for mounting the circuit breaker in an appropriate loadcenter. The breaker includes a coiled neutral lead or pigtail 20 that connects (within the housing 12) with a flexible lead 21a that passes through the window of a ground fault transformer 22 and is coupled to a trip coil 24 via lead 21b. The phase conductive path includes a breaker mechanism of the type described in United States Patent No. 2,902,560 and incorporated herein by reference, but not shown, that connects to phase stab 16 and to a bimetallic element (often referred to as a magnetic yoke or loop), the end portion (56) of which is shown, and a stranded wire 23 that passes through the window of GFI transformer 22. A phase load connector terminal 26 and a neutral load connector terminal 28 are connected, generally by welding, to stranded wires 23 and 21a. Specifically phase wire 23 is welded to the magnetic loop end portion 56 and to terminal 26. The neutral wire 21a is welded to terminal 28 and soldered to pigtail 20 and trip coil lead 21b. A load phase conductor 27 and a load neutral conductor 29 are connectable to terminal 26 and 28, respectively. The end of pigtail 20 (which is generally much longer than illustrated) is connectable to the neutral bar of the loadcenter.

FIG. 2, illustrates a circuit breaker 30 that is constructed in accordance with the invention. Breaker 30 includes a body or housing 32 with a resilient phase or line stab 38 that is engageable, via suitable apertures 40, with a phase busbar (not shown) in a panel board 36. The configuration of the panel board 36 and breaker housing 32 are as disclosed in the co-pending application mentioned above. Breaker 30 also includes a resilient neutral jaw 42 that is engageable with the neutral bar 44 in the loadcenter. Neutral bar 44, as illustrated, is rectangular and includes a plurality of threaded apertures and matching screws 46 and plain apertures 48. The stripped ends of neutral conductors to the various load circuits are placed in respective ones of apertures 48 and electrically and mechanically secured thereto by tightening the appropriate one of screws 46. The neutral jaw 42 is designed to mechanically and electrically engage the neutral bar 44. In operation the jaw straddles a corresponding one of the screws 46. Because of the cut away plastic portion 37, access to all but one of the apertures 48 is permitted when breaker 30 is mounted in position. Thus mounting of the circuit breaker of the invention to the panel board, does not affect the ability of the neutral bar 44 to accommodate conventional neutral wire connections or additional circuit breakers of the invention.

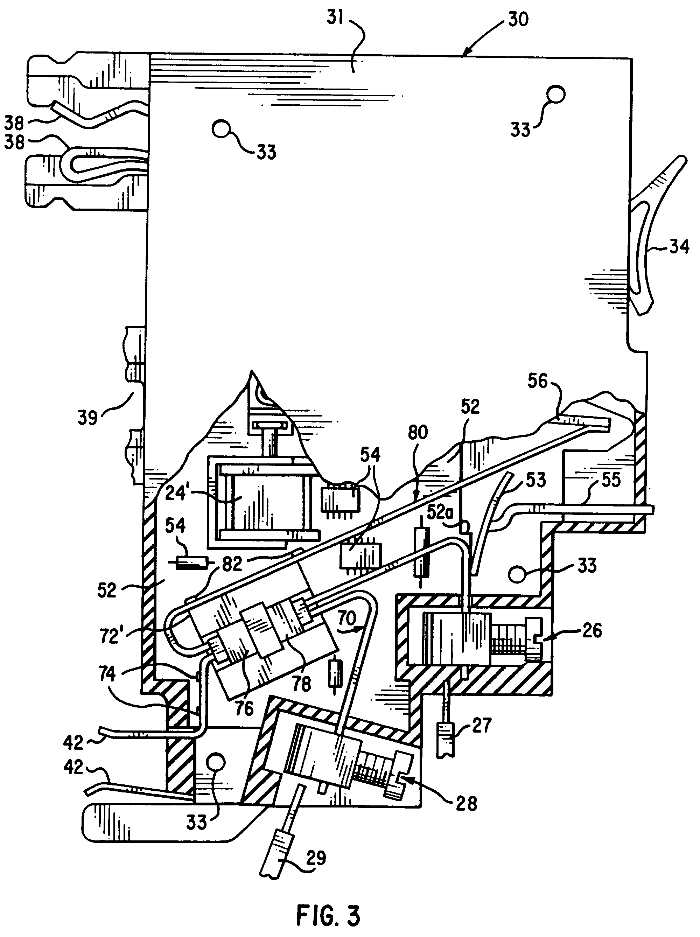

In FIG. 3 a partial cut away view of breaker 30 is illustrated. A plurality of apertures 33 may be used to secure a removable cover to the breaker housing. A rocker type handle mechanism 34 with a large curved area, for permitting ready and comfortable manipulation by the human thumb, is also shown. Since the operating and circuit interrupting mechanisms of the breaker are well known, and do not play a significant role in the present invention, they are not discussed further. Reference may be made to United States Patent No. 2,902,560, aforesaid for such discussion. A printed circuit board 52 is generally illustrated and includes a number of electrical components 54 (such as resistors, capacitors and integrated circuits) mounted thereon. A modified trip coil 24' is illustrated. The modification consists in having both terminals of the trip coil 24' connected to circuit foil patterns (not shown) on the printed circuit board 52 rather than having a lead (21b, FIG.1) that has to be separately soldered. As will be seen this construction and that of the strap type neutral and phase conductors, permits simplified manufacture with wave soldering techniques. The neutral and phase conductors 70 and 80, respectively are in the form of flat conductive straps that are bent to appropriate shape and connected to phase and neutral load connector terminals 27 and 29, respectively. The other end of neutral conductor 70 has neutral jaw 42 integrally formed thereat. Phase conductor 80 is welded to magnetic loop end portion 56. Both conductors 70 and 80 pass through a window in GFI transformer 22' as shown. Conductors 70 and 80 are physically supported on printed circuit board 52 by means of pairs of legs 74 and 82, respectively, that are soldered to board 52. A test circuit is formed by a flat metal spring element 53 that is movable by a test button 55 that extends outside of breaker 30 and electrically engages a conductive edge 52a on printed circuit board 52 and a portion of phase comductor 80. The spring element 53 is biased to a nonengaging position. The test feature simulates a ground fault to test the GFI.

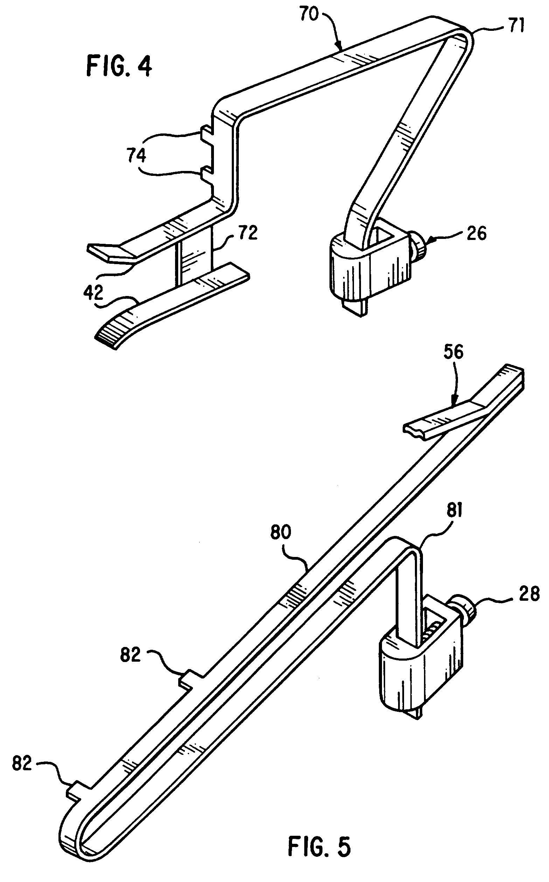

As best shown in FIGS. 4 and 5, the conductors 70 and 80 are formed by cutting stock material to appropriate length and shape and bending. Thus a simple manufacturing technique is used to form the bight portion 72 of jaw 42 and leg portions 74. In practice the bends 71 and 81 of the strap conductors 70 and 80 may be formed after insertion of the conductors through the window of transformer 22' and before the wave soldering operation. The terminals 26 and 28 are of standard split bolt construction. Tightening of the screws therein serves to mechanically secure and to electrically connect the appropriate load wires to the strap conductors.

A comparison of the FIGS. 1 and 3 clearly illustrates the manufacturing advantages achieved with the arrangement of the invention. Specifically, the only separate connection that is required in FIG. 3 is the welding of phase connector 80 to magnetic loop end portion 56. On the contrary, the FIG. 1 construction involves the additional welding of wires 21a and 23 as well as a soldered junction or mechanical stake of three wires (21a, 21b and pigtail 20). Further, the breaker of FIG. 1 requires that a separate screw type neutral connection be made by the technician. Specifically, the pigtail 20 has to be connected to the neutral bar of the loadcenter. That is accomplished automatically in the novel circuit breaker of the invention by jaw 42 physically engaging the neutral bar. It is thus clear that significant savings in manufacturing cost and installation time are achieved with the breaker of the invention. Further, the danger that the electrician will fail to make the connection to the panel neutral is eliminated.

## Claims

1. A plug-in circuit breaker (30) for use with a loadcenter having an electrical phase busbar and an electrical neutral bar (44) comprising:
a first push-on connector (38) adapted to mechanically and electrically engage said electrical phase busbar;
interrupting means for interrupting current connected to said first push-on connector;
ground fault circuit means including a transformer (22'), said transformer further including a window; **characterised in that** the breaker further comprises:
a second push-on connector (42) adapted to mechanically and electrically engage said electrical neutral bar;
first and second flat, rigid conductive straps (80, 70) passing through said window;
said first conductive strap being coupled to said interrupting means at one end and to a phase load terminal at its other end; and
said second conductive strap being coupled to said second push-on connector at one end and to a neutral load terminal (28) at its other end.

2. A circuit breaker as claimed in claim 1, wherein the transformer is mounted on a printed circuit board (52), said first and second straps being mechanically secured to said printed circuit board.

3. A circuit breaker as claimed in either of claims 1 or 2, wherein said second push-on connector is integrally formed with said second conductive strap and comprises a pair of resilient jaw members (42).

4. A plug-in circuit breaker (30) for use with a loadcenter having an electrical phase busbar and an electrical neutral busbar (44) comprising:
a housing (32) including means for interrupting current;
electronic ground fault sensing means, including a transformer (22') in said housing;
first push-on connector means (38) adapted to mechanically and electrically engage said electrical phase busbar;
**characterised in that** the breaker further comprises:
second push-on connector means (42) adapted to mechanically and electrically engage said electrical neutral bar;
first and second terminals (26, 28) connected to said first and second push-on connector means, respectively, and adapted to connect an electrical phase and an electrical neutral load conductor to said circuit breaker;
a neutral conductive strap (70) and a phase conductive strap (80) supported on said printed circuit board and passing through a window in said transformer and connected at one end, respectively, to said first and second terminals, said transformer being magnetically coupled to said conductive straps and responsive to currents flowing therein, said second push-on connector means being formed at the other end of said neutral conductive strap.

## Patentansprüche

1. Einsteckbarer Leitungsschutzschalter (30) zur Verwendung an einem Schaltkasten mit einer elektrischen Außenleitersammelschiene und einer Neutralleiterschiene (44), mit:
einem ersten Steckverbinder (38), der dazu dient, die elektrische Außenleitersammelschiene mechanisch und elektrisch zu kontaktieren;
Unterbrechermitteln zum Unterbrechen von auf den ersten Steckverbinder geleiteten Strom;
Erdfehler-Schaltungsmitteln einschließlich eines Transformators (22'), wobei der Transformator außerdem eine Öffnung aufweist; dadurch gekennzeichnet, daß der Leitungsschutzschalter außerdem aufweist:
einen zweiten Steckverbinder (42) der dazu dient, die elektrische Neutralleiterschiene mechanisch und elektrisch zu kontaktieren;
erste und zweite flache, starre Leiterstreifen (80, 70), die durch die Öffnung führen;
wobei der erste Leiterstreifen an einem Ende mit dem zweiten Steckverbinder und an seinem anderen Ende mit einem Last-Nullanschluß (28) verbunden ist.

2. Leitungsschutzschalter nach Anspruch 1, bei dem der Transformator auf einer gedruckten Leiterplatte (52) montiert ist, wobei der erste und der zweite Leiterstreifen an der gedruckten Leiterplatte mechanisch gesichert sind.

3. Leitungsschutzschalter nach einem der Ansprüche 1 oder 2, bei dem der zweite Steckverbinder mit dem zweiten Leiterstreifen einstückig ausgebildet ist und ein Paar federnder Klauenelemente (42) aufweist.

4. Leitungsschutzschalter (30) zur Verwendung an einem Schaltkasten mit einer elektrischen Außenleiterschiene und einer elektrischen Neutralleiterschiene (44) mit:
einem Gehäuse (32), das Mittel zum Stromunterbrechen enthält;
elektronischen Erdfehler-Erfassungsmitteln, die einen Transformator (22') in dem Gehäuse enthalten;
ersten Steckverbindermitteln (38), die dazu dienen, die elektrische Außenleiterschiene mechanisch und elektrisch zu kontaktieren;
dadurch gekennzeichnet, daß der Leitungsschutzschalter außerdem aufweist:
zweite Steckverbindermittel (42), die dazu dienen, die elektrische Neutralleiterschiene mechanisch und elektrisch zu kontaktieren;
erste und zweite Anschlüsse (26, 28), die mit dem ersten bzw. dem zweiten Steckverbindermittel verbunden sind und dazu dienen, einen elektrischen Phasenleiter der Last und einen elektrischen Neutralleiter der Last an den Leitungsschutzschalter anzuschließen;
einen Neutral-führenden Leiterstreifen (70) und ein Phasen-führendes Band (80), die an der gedruckten Leiterplatte gehalten sind und durch eine in dem Transformator vorgesehene Öffnung führen, sowie an einem Ende entsprechend mit dem ersten und dem zweiten Anschluß verbunden sind, wobei der Transformator mit den Leiterbändern magnetisch gekoppelt und von in diesen fließenden Strömen gesteuert ist, und wobei das zweite Steckverbindermittel an dem anderen Ende des Neutral-führenden Leiterstreifens ausgebildet ist.

## Revendications

1. Un disjoncteur enfichable (30) destiné à être utilisé avec un centre de distribution comportant un élément électrique d'amenée de phase et un élément électrique de neutre (44), lequel disjoncteur comprend :
un premier connecteur à emboîtement (38) prévu pour s'engager mécaniquement et électriquement avec ledit élément électrique d'amenée de phase ;
un moyen de coupure pour interrompre le courant issu dudit premier connecteur à emboîtement ;
un circuit pour défaut de terre comprenant un transformateur (22'), ledit transformateur comportant d'autre part une fenêtre ;
et est caractérisé en ce qu'il comprend en outre :
un second connecteur à emboîtement (42) prévu pour s'engager mécaniquement et électriquement avec ledit élément électrique de neutre ;
des première et deuxième bandes conductrices rigides plates (80, 70) traversant ladite fenêtre ;
ladite première bande conductrice ayant une extrémité couplée audit moyen de coupure et son autre extrémité couplée à une borne d'amenée de phase ; et
ladite seconde bande conductrice ayant une extrémité couplée audit second connecteur à emboîtement et son autre extrémité couplée à une borne de neutre (28).

2. Un disjoncteur selon la revendication 1, dans lequel le transformateur est monté sur une carte de circuit imprimé (52), lesdites première et seconde bandes étant fixées mécaniquement à ladite carte de circuit imprimé.

3. Un disjoncteur selon la revendication 1 ou 2, dans lequel ledit second connecteur à emboîtement forme une seule pièce avec ladite seconde bande conductrice et comprend une paire d'éléments de mâchoire élastiques (42).

4. Un disjoncteur enfichable (30) destiné à être utilisé avec un centre de distribution comportant un élément électrique d'amenée de phase et un élément électrique de neutre (44), lequel disjoncteur comprend :
un boîtier (32) comportant un moyen pour interrompre le courant ;
un moyen électronique de détection de défaut de terre, comportant un transformateur (22') dans ledit boîtier ;
un premier moyen de connexion à emboîtement (38) prévu pour s'engager mécaniquement et électriquement avec ledit élément électrique d'amenée de phase ;
et est caractérisé en ce qu'il comprend en outre :
un second moyen de connexion à emboîtement (42) prévu pour s'engager mécaniquement et électriquement avec ledit élément électrique de neutre ;
des première et seconde bornes (26, 28) connectées respectivement auxdits premier et second moyens de connexion à emboîtement, et prévues pour connecter un conducteur électrique d'amenée de phase et un conducteur électrique de neutre audit disjoncteur ;
une bande conductrice de neutre (70) et une bande conductrice de phase (80) supportées sur ladite carte de circuit imprimé, traversant une fenêtre dans ledit transformateur, et connectées par une extrémité, respectivement, auxdites première et seconde bornes, ledit transformateur étant magnétiquement couplé auxdites bandes conductrices et sensible à des courants qui y passent, ledit second moyen de connexion à emboîtement étant formé à l'autre extrémité de ladite bande conductrice de neutre.
